# EUROPEAN PATENT APPLICATION

(11) **EP 4 458 731 A1**
(43) Date of publication of application: **06.11.2024**
(21) Application number: 23171802.4
(22) Date of filing: 05.05.2023
(51) Int. Cl.: B65D 90/00, B60P 7/13, B63B 25/28

(54) **LASHING SYSTEM FOR SUPPORTING CONTAINERS**

(71) Applicant: MacGregor Finland Oy, 20780 Kaarina (FI)
(72) Inventor: Virta, Atte, 31400 Somero (FI)
(74) Representative: Papula Oy

(57) **Abstract**

A lashing system (1) for supporting containers (8,9) located on top of each other, wherein the lashing system (1) comprises at least one upper lashing element (2) comprising an upper lashing bar (4) and an upper turnbuckle (5), wherein the upper lashing bar (4) is configured to be connected to an upper container (8) . At least one lower lashing element (3) comprises a lower lashing bar (6) and a lower turnbuckle (7), wherein the lower lashing bar (6) is configured to be connected to the lower container (9). The upper lashing bar (4) has a higher strength against the tension than the lower lashing bar (6). Also a lashing arrangement and a method is disclosed.

## Description

### FIELD OF THE INVENTION

The present application relates generally to a lashing system. More specifically, the present application relates to supporting containers located on top of each other with the lashing system comprising lashing bars.

### BACKGROUND OF THE INVENTION

Container lashing bars are used in cargo ships to give additional support to stacked containers on a deck of a ship. The lashing bars give support especially when the ship is heeling at rough weather and each container stack is tilting sideways. Typically there are lashing bars connected to two containers located on top of each other in a container stack. In this situation the lashing bars and container locks are subject to heavy tension load. Function of the lashing bars may be improved to optimize strength and weight of the lashing bars.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter. The scope of protection sought for various embodiments of the present disclosure is set out by the independent claims.

Example embodiments of the present disclosure provide a lashing system for supporting containers located on top of each other, which optimize material usage in the lashing elements that are locking and supporting the containers onboard a ship. When the ship is heeling heavily and container stacks are tilting sideways, container locks may tie the containers together and the lashing elements may give additional support to the container stacks. Typically the lashing elements may be fixed at two or more different height positions in the container stack. The lashing element may comprise a lashing bar and a turnbuckle. Tension forces acting in lashing bars and turnbuckles may vary remarkably depending on a height position the lashing bar is fixed to. Usually tension forces may be larger at bigger heights. A tension force acting in an upper lashing bar may be up to 80 - 100 % greater than the tension force acting in a lower lashing bar. It may be possible that the upper lashing bar may carry the whole tension load while the lower lashing bar may not have any tension load at all. It may be quite uneconomical to use similar lashing bars and turnbuckles also in a lower position. Despite of this fact, all lashing bars and turnbuckles in one ship may have the same strength. This means that a structure and loading capacity of the upper and the lower lashing elements may have been designed to tolerate the same tension force. This may lead to a situation where 50 - 70 % of the lashing elements onboard may be over-sized in relation to the actual strength needs. By using optimized lashing bars and turnbuckles the size and weight may be made smaller in positions where the highest loads never exist. A weight reduction of 20 - 40 % may be possible compared to the lashing bars and the turnbuckles having the same strength. This may enable direct savings in material usage during manufacturing which, in turn, may bring a positive effect on manufacturing costs. Impact on greenhouse gas emissions may be on the positive side, when less material may be needed to produce corresponding but lighter products.

According to an example embodiment, mixing of the lashing elements is prevented by designing shapes of connecting pieces in such a way that only components with a same strength category are compatible and are connected together. From manufacturing point of view the proposed structure may not bring any new challenges and conventional manufacturing methods may be applicable. One large container ship may comprise thousands of lashing bars and turnbuckles which may make the total material and cost saving potential remarkable. The workload of stevedores in container terminals may be high as there may be thousands of repeating manual operations required when the lashing bars may be attached to or detached from the containers during container ship loading operations. Any saved kilogram in items to be handled may be a benefit.

According to a first aspect, a lashing system for supporting containers located on top of each other is disclosed. The lashing system may comprise at least one upper lashing element, which may comprise an upper lashing bar and an upper turnbuckle, wherein the upper lashing bar may be configured to be connected to an upper container; at least one lower lashing element, which may comprise a lower lashing bar and a lower turnbuckle, wherein the lower lashing bar may be configured to be connected to the lower container; wherein the upper lashing bar may have a higher strength against the tension than the lower lashing bar. With lighter lower lashing elements, it may be easier and faster to attach or detach the lashing elements from the containers during container ship loading operations.

According to an example embodiment of the first aspect, the upper lashing bar may have an upper lashing bar cross-sectional area; the lower lashing bar may have a lower lashing bar cross-sectional area; and the upper lashing bar cross-sectional area may be greater than the lower lashing bar cross-sectional area. Smaller cross-sectional area of lower lashing bars may save materials and the lighter lashing bars may be easier to handle.

According to an example embodiment of the first aspect, the upper lashing bar may be configured to be connected from a first upper lashing bar end to an upper container and from a second upper lashing bar end to the upper turnbuckle; the lower lashing bar may be configured to be connected from a first lower lashing bar end to a lower container and from a second lower lashing bar end to the lower turnbuckle; the upper lashing bar may have an upper lashing bar diameter; the lower turnbuckle may comprise a lower fixing fork, which may have a lower fixing fork opening width; and the upper lashing bar diameter may be greater than the lower fixing fork opening width. When upper lashing bar dimensions and form is too big, the upper lashing bar may not be attached to the lower fixing fork opening. This way it may not be possible to attach the upper lashing bar to a lower fixing fork opening.

According to an example embodiment of the first aspect, the second upper lashing bar end may comprise an upper fixing knob; the upper turnbuckle may comprise an upper fixing fork comprising an upper collar; and the upper fixing knob may be configured to be attached to the upper collar. The upper collar may have a form wherein the upper fixing knob may fit and it may attach the upper fixing knob to the upper fixing fork so that the upper fixing knob may not pass through an upper fixing fork opening.

According to an example embodiment of the first aspect, the second lower lashing bar end may comprise a lower fixing knob, which may have a lower fixing knob diameter; the upper turnbuckle may comprise the upper fixing fork, which may have an upper fixing fork opening width; and the lower fixing knob diameter may be smaller than the upper fixing fork opening width. When lower fixing knop dimensions and form is too small to an upper fixing fork opening, the lower fixing knop may slide through the lower fixing fork opening. This way it may not be possible to attach the lower lashing bar to the upper fixing fork opening.

According to an example embodiment of the first aspect, the lower fixing fork may comprise a lower collar and the lower fixing knob may be configured to be attached to the lower collar. The lower collar may have a form wherein only the lower fixing knob may fit and it may not allow the lower fixing knob to pass through lower fixing fork opening.

According to an example embodiment of the first aspect, an upper end of the upper lashing element may be configured to be attached to a lower corner piece of the upper container; and the upper end of the lower lashing element may be configured to be attached to the upper corner piece of the lower container.

According to an example embodiment of the first aspect, the first upper lashing bar end may comprise an upper fixing hook; the first lower lashing bar end may comprise a lower fixing hook; and a form of the lower fixing hook may be configured to prevent the lower fixing hook to be attached to a lower corner piece of the upper container. The form and/or size of the lower fixing hook may be such that it may not be fitted to a lower corner piece opening of the upper container.

According to an example embodiment of the first aspect, the upper fixing hook may have an upper fixing hook width; the lower fixing hook may have a lower fixing hook width; and the lower fixing hook width may be greater than the upper fixing hook width. When the lower fixing hook width is greater than the upper fixing hook width it may not be possible to fit the lower fixing hook to a lower corner piece opening of the upper container.

According to an example embodiment of the first aspect, the upper fixing hook may be configured to attach the upper lashing element to a lower corner piece opening of the upper container; and the lower fixing hook may be configured to attach the lower lashing element to an upper corner piece opening of the lower container. The lower fixing hook is made so that it may be fitted only to the upper corner piece opening of the lower container.

According to an example embodiment of the first aspect, at least one of the following: the upper lashing bar, the lower lashing bar, the upper turnbuckle, and/or the lower turnbuckle may be colour coded. Colour coding may be used to separate the upper lashing bar, the lower lashing bar, the upper turnbuckle, and/or the lower turnbuckle from each other.

According to a second aspect, a lashing arrangement is disclosed. The lashing arrangement may comprise at least one lashing system according to any one of the example embodiments of the first aspect.

According to an example embodiment of the second aspect, at least one lower corner piece of the upper container may comprise a lower corner piece opening; at least one upper corner piece of the lower container may comprise an upper corner piece opening; and a form of the lower fixing hook may be configured to prevent the lower fixing hook to be attached to the lower corner piece opening of the upper container.

According to an example embodiment of the second aspect, the lower corner piece opening may have an upper opening width; the upper corner piece opening may have a lower opening width; the upper opening width may be smaller than the lower opening width; and the lower fixing hook width may be greater than the upper opening width. When the width of the lower fixing hook is greater than the upper opening width it may not be possible to fit the lower fixing hook to the lower corner piece opening of the upper container.

According to a third aspect, a method for supporting containers located on top of each other with a lashing system is disclosed. The lashing system may comprise at least one upper lashing element, which comprise an upper lashing bar and an upper turnbuckle; and at least one lower lashing element, which may comprise a lower lashing bar and a lower turnbuckle; wherein the upper lashing bar may have a higher strength against the tension than the lower lashing bar, wherein the method may comprise connecting the upper lashing bar to an upper container; and connecting the lower lashing bar to the lower container. With the lighter lower lashing elements, it may be easier and faster to attach or detach the lashing elements from the containers during container ship loading operations.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
Fig. 1 shows schematically an example of a side view of a lashing arrangement, according to an example embodiment;
Fig. 2 shows schematically an example of a side view of a lashing system, according to an example embodiment;
Fig. 3 shows schematically an example of a side view of another lashing system, according to an example embodiment;
Fig. 4a shows schematically an example of a partial view of an upper lashing bar that has accidentally been tried to be installed into lower turnbuckle, according to an example embodiment;
Fig. 4b shows schematically an example of a cross section A-A of figure 4a, according to an example embodiment;
Fig. 5a shows schematically an example of a partial view of a lower lashing bar installed accidentally into upper turnbuckle, according to an example embodiment;
Fig. 5b shows schematically an example of a cross section B-B of figure 5a, according to an example embodiment;
Fig. 6a shows schematically an example of a side view of an upper fixing hook, according to an example embodiment;
Fig. 6b shows schematically an example of a front view of the upper fixing hook, according to an example embodiment;
Fig. 6c shows schematically an example of a front view of a lower corner piece of an upper container, according to an example embodiment;
Fig. 6d shows schematically an example of a front view of a lower fixing hook, according to an example embodiment;
Fig. 6e shows schematically an example of a front view of an upper corner piece of a lower container, according to an example embodiment;
Fig. 7a shows schematically an example that the lower fixing hook cannot be fitted into a lower corner piece opening, according to an example embodiment;
Fig. 7b shows schematically an example of the lower fixing hook attached into an upper corner piece opening, according to an example embodiment; and
Fig.8 shows an example method, according to an example embodiment.

Like references are used to designate like parts in the accompanying drawings.

### DETAILED DESCRIPTION

Reference will now be made in detail to example embodiments, examples of which are illustrated in the accompanying drawings. The detailed description provided below in connection with the appended drawings is intended as a description of the present examples and is not intended to represent the only forms in which the present example may be constructed or utilized. The description sets forth the functions of the example and the sequence of steps or operations for constructing and operating the example. However, the same or equivalent functions and sequences may be accomplished by different examples.

Container lashing elements may be used in cargo ships to give additional support to stacked containers on a deck of a ship. Especially when the ship is heeling at rough weather each stack of containers may be tilted sideways. In this situation the lashing elements and container locks may be subject to heavy tension load. There may be two lashing elements connected to two containers located on top of each other in a container stack. There may be lashing elements attached to one end of a container located, for example, in a stack of up to 11 containers, one in each top corner and bottom corner. The lashing elements may be attached to the third and fourth container calculated from the bottom of the stack, but also other height options may be used. For example, the lashing elements may be attached to the containers below the third and fourth container.

According to an example embodiment the upper lashing element may be attached to the upper container and the lower lashing element may be attached to the lower container. The lower container may locate straight below the upper container or there may be one or more intermediate containers between the upper container and the lower container wherein the lower lashing element may be attached. Depending on the size, especially the length, of the container, the lashing elements may be used at both ends or just at one end of the container. The lashing element may comprise a lashing bar and a turnbuckle. An upper end of the lashing bar may be attached to the container. A lower end of the lashing bar may be attached to a turnbuckle that may be fixed to a lashing bridge on the deck of the ship. In some cases the turnbuckles may also be fixed directly on the deck of the ship.

The lashing system may be an economical system that may maximize a combined strength capacity of the lashing elements and the container lock in an arrangement where two lashing elements are connected to two containers located on top of each other in a container stack. This may apply to one side of the container stack and usually the other side may have a similar arrangement as a mirror view. Often the other end of the container stack may also have the same arrangement.

According to the example embodiment, the lashing system comprises at least two lashing elements, wherein at least one lashing element has a different load carrying capacity i.e. strength against tension force than other one or more lashing elements. In the lashing system, at least one lashing element may have a lower strength against a tension force acting in the lashing system compared to the other one or more lashing elements. The upper lashing element may have a higher strength against the tension force than the lower lashing element. The upper lashing element may be attached to a container in a stack and the lower lashing element may be attached to another container at lower height position in the same stack. The upper lashing element may be attached to a lower corner piece of an upper container and the lower lashing element may be attached to an upper corner piece of a lower container located just below the upper container in the same stack. Each of the lashing elements may comprise a lashing bar and a turnbuckle. The lashing bar of the lashing element with lower strength may be equipped with a fixing hook, which may have such a form that it may not be fitted to the lower corner piece of a container. The lashing element with the lower strength may be the lower lashing bar.

According to an example embodiment, the fixing hook of the lashing element with the lower strength may have a fixing hook width, which may be larger than a lower corner piece opening of the upper container. The lower corner piece opening of the upper container may be smaller than an upper corner piece opening of the lower container.

According to an example embodiment, the lashing bar of the lashing element with lower strength may have such form and dimensions that it may not be fixed to the turnbuckle of the lashing element with higher strength. The lashing element with the higher strength may be the upper lashing bar. To prevent accidental mixing of the higher and lower strength lashing bars, the fixing knobs of the lower lashing bar with the lower strength may be so small that they may not get proper grip if installed to the fixing fork of the upper turnbuckle. Thus, the lashing bar of the lashing element with lower strength may have a fixing knob with an outer diameter smaller than a fixing fork opening of the turnbuckle of the lashing element with higher strength. Likewise, the fixing fork opening of the lower turnbuckle may be so small that the upper lashing bar with higher strength may not be fitted into the fork opening. Thus, the lashing bar with higher strength may have an outer diameter bigger than a fixing fork opening of the turnbuckle of the lashing element with the lower strength.

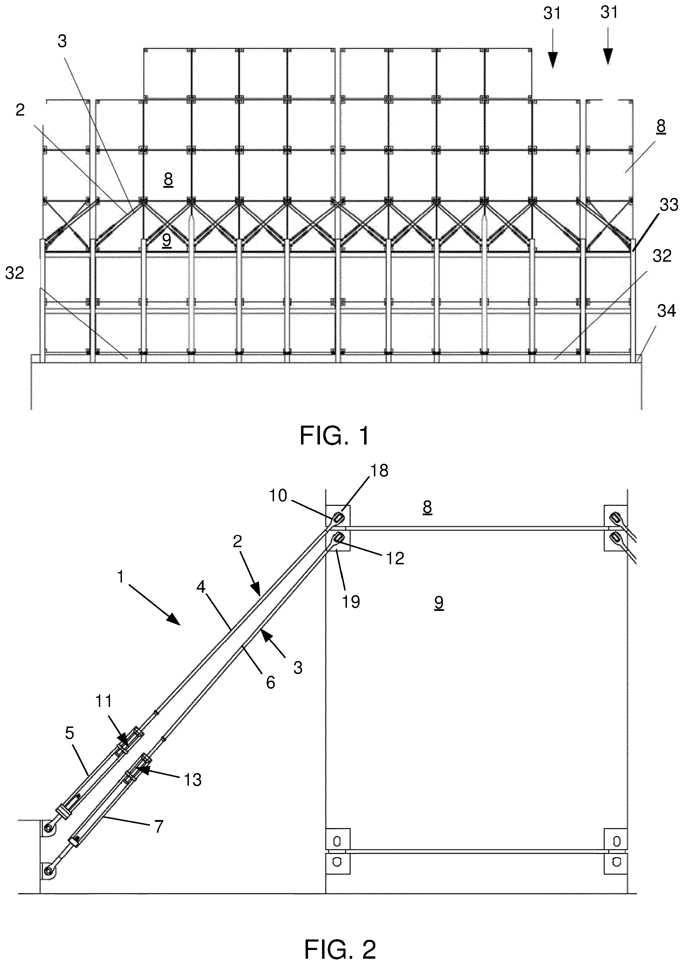

An example of Fig. 1 shows schematically a side view of a lashing arrangement, which may comprise one or more lashing systems 1. Purpose of the lashing system 1 is to tie and support containers on a deck 34 of a ship. The lashing system 1 may be attached to one side at one end of a container stack 31. There may be a similar lashing system 1 attached to the other side of the same container stack 31, and often also at the other end of the same container stack 31. As a total there may be hundreds or even thousands of similar lashing systems 1 onboard one ship. The lashing elements 2, 3 may comprise lashing bars 4, 6 and turnbuckles 5, 7, which may be typical lashing components, but also other type of lashing components may be used for the same purpose. The containers 8, 9 may be located on top of each other in the same vertical line to form one container stack 31. There may be numerous container stacks 31 side by side and in a longitudinal direction onboard the ship.

Fig. 1 shows an example of the lashing arrangement of one bay on the deck 34 of the container ship, where a lashing bridge 33 is fixed to the deck 34 of the ship. The container stacks 31 may comprise containers 8, 9 on top of each other. The container stacks 31 may stand on hatch covers 32 resting on the deck 34. The lashing bars 4, 6 may be attached to containers 8, 9.

An example of Fig. 2 shows schematically a side view of a lashing system 1 in a resting position when the ship has been loaded and the container stacks 31 are in upright vertical direction. In this position there may be very little tension forces acting in the lashing system 1 and the main force component in the container stack 31 may be the compression force caused by the weight of the containers 8, 9.

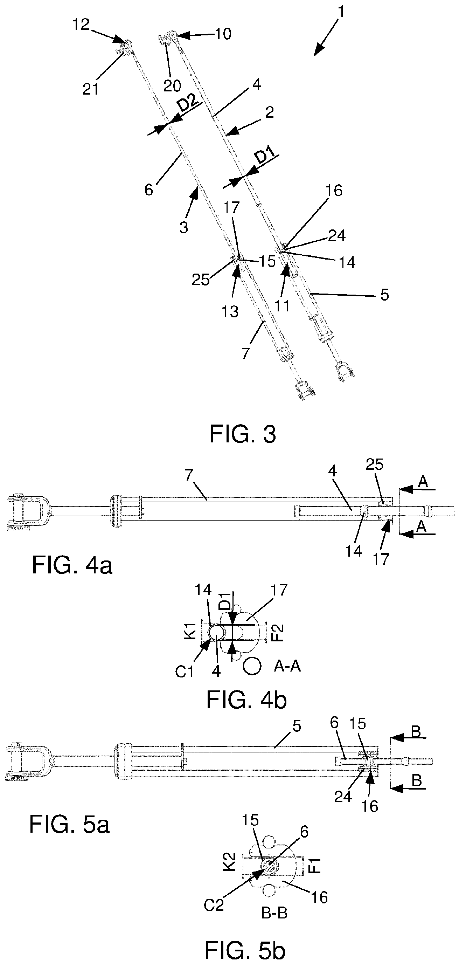

An example of Fig. 3 shows schematically a side view of another lashing system 1.

According to an example embodiment, the lashing system may support containers 8, 9 located on top of each other. The lashing system 1 may comprise at least one upper lashing element 2, which may comprise an upper lashing bar 4 and an upper turnbuckle 5, wherein the upper lashing bar 4 may be configured to be connected to an upper container 8. The lashing system 1 may further comprise at least one lower lashing element 3, which may comprise a lower lashing bar 6 and a lower turnbuckle 7, wherein the lower lashing bar 6 may be configured to be connected to the lower container 9. The upper lashing bar 4 may have a higher strength against the tension than the lower lashing bar 6.

According to an example embodiment, an upper end of the upper lashing element 2 is configured to be attached to a lower corner piece 18 of the upper container 8. The upper end of the lower lashing element 3 may be configured to be attached to the upper corner piece 19 of the lower container 9.

According to an example embodiment, the upper lashing bar 4 is configured to be connected from a first upper lashing bar end 10 to an upper container 8 and from a second upper lashing bar end 11 to the upper turnbuckle 5. The lower lashing bar 6 may be configured to be connected from a first lower lashing bar end 12 to a lower container 9 and from a second lower lashing bar end 13 to the lower turnbuckle 7. The upper lashing bar 4 may have an upper lashing bar diameter D1. The lower lashing bar 6 may have a lower lashing bar diameter D2. The upper turnbuckle 5 may comprise an upper fixing fork 16, which may have an upper fixing fork opening width F1. The lower turnbuckle 7 may comprise a lower fixing fork 17, which may have a lower fixing fork opening width F2. The upper lashing bar diameter D1 may be greater than the lower fixing fork opening width F2. The lower fixing knob diameter K2 may be smaller than the upper fixing fork opening width F1. This way the wrong lashing bar 4, 6 may not be attached to the wrong fixing fork 16, 17.

According to an example embodiment, the second upper lashing bar end 11 comprises an upper fixing knob 14. The second lower lashing bar end 13 may comprise a lower fixing knob 15. The upper fixing fork 16 may comprise an upper collar 24. The lower fixing fork 17 may comprise a lower collar 25. The upper fixing knob 14 may be configured to be attached to the upper collar 24. The lower fixing knob 15 may be configured to be attached to the lower collar 25.

According to an example embodiment, the upper lashing bar 4 has an upper lashing bar cross-sectional area C1. The lower lashing bar 6 may have a lower lashing bar cross-sectional area C2. The upper lashing bar cross-sectional area C1 may be greater than the lower lashing bar cross-sectional area C2.

According to an example embodiment, at least one of the following: the upper lashing bar 4, the lower lashing bar 6, the upper turnbuckle 5, and/or the lower turnbuckle 7 is colour coded. This may make separating the parts from each other easier.

An example of Fig. 4a shows schematically a partial view of an upper lashing bar 4 that has accidentally been tried to be installed into a lower turnbuckle 7. An example of Fig. 4b shows schematically a cross section A-A of figure 4a. As the example of Fig. 4b shows, the upper lashing bar diameter D1 is greater than the lower fixing fork opening width F2. Thus, the upper lashing bar 4 may not be fixed to the lower fixing fork 17.

An example of Fig. 5a shows schematically a partial view of a lower lashing bar 6 installed accidentally into an upper turnbuckle 5. An example of Fig. 5b shows schematically a cross section B-B of figure 5a. As the example of Fig. 5b shows, the lower fixing knob diameter K2 is smaller than the upper fixing fork opening width F1. The lower lashing bar 6 may slide through the upper fixing fork 16. Thus, it may not be possible to fix the lower lashing bar 6 to the upper fixing fork 16.

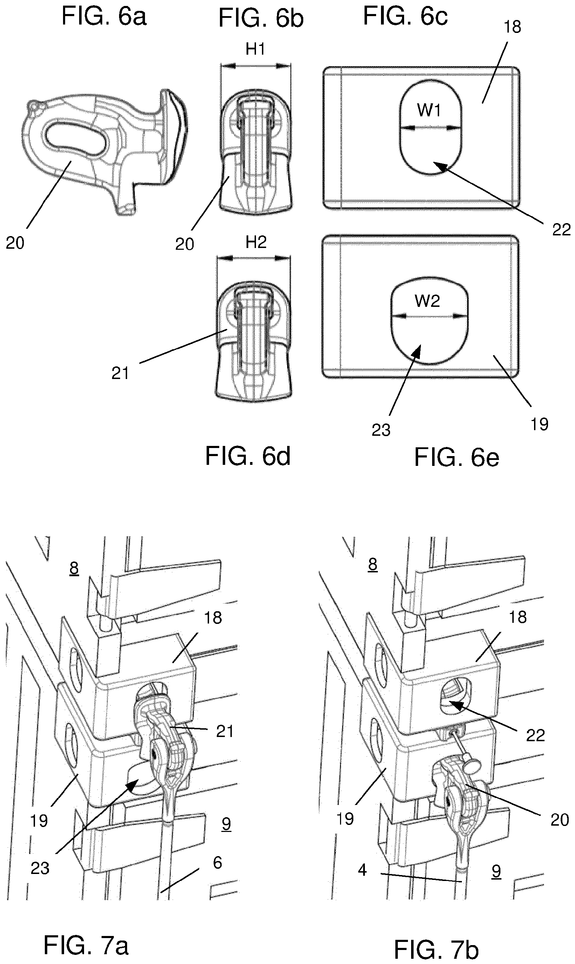

An example of Fig. 6a shows schematically a side view of an upper fixing hook 20. An example of Fig. 6b shows schematically an example of a front view of the upper fixing hook 20 of Fig 6a. An example of Fig. 6c shows schematically a front view of a lower corner piece 18 of an upper container 8. An example of Fig. 6d shows schematically a front view of a lower fixing hook 21. An example of Fig. 6e shows schematically a front view of an upper corner piece 19 of a lower container 9.

According to an example embodiment, a first upper lashing bar end 10 comprises an upper fixing hook 20. A first lower lashing bar end 12 may comprise a lower fixing hook 21. The upper fixing hook 20 may be attached to the first upper lashing bar end 10. The lower fixing hook 21 may be attached to the first lower lashing bar end 12. A form of the lower fixing hook 21 may be configured to prevent the lower fixing hook 21 to be attached to a lower corner piece 18 of the upper container 8.

According to an example embodiment, the upper fixing hook 20 has an upper fixing hook width H1. The lower fixing hook 21 may have a lower fixing hook width H2. The lower fixing hook width H2 may be greater than the upper fixing hook width H1.

The lower corner piece 18 may have a lower corner piece opening 22. The upper corner piece 19 may have an upper corner piece opening 23. The lower corner piece opening 22 may have an upper opening width W1. The upper corner piece opening 23 may have a lower opening width W2. According to an example embodiment, the upper opening width W1 is smaller than the lower opening width W2. The lower fixing hook width H2 may be greater than the upper opening width W1. The form of the lower fixing hook 21 may be configured to prevent the lower fixing hook 21 to be attached to the lower corner piece opening 22 of the upper container 8.

According to an example embodiment, the upper fixing hook 20 may be configured to attach the upper lashing element 2 to the lower corner piece opening 22 of the upper container 8. The lower fixing hook 21 may be configured to attach the lower lashing element 3 to the upper corner piece opening 23 of the lower container 9.

An example of Fig. 7a shows schematically that the lower fixing hook 21 cannot be fitted into the lower corner piece opening 22 of the upper container 8. An example of Fig. 7b shows schematically the upper fixing hook 20 attached into the upper corner piece opening 23 of the lower container 9.

According to an example embodiment, a lashing arrangement may comprise at least one lashing system 1 according to any one of Figures 2 or 3. According to an example embodiment, at least one lower corner piece 18 of the upper container 8 comprises the lower corner piece opening 22. At least one upper corner piece 19 of the lower container 9 comprises the upper corner piece opening 23. The form of the lower fixing hook 21 may be configured to prevent the lower fixing hook 21 to be attached to the lower corner piece opening 22 of the upper container 8. According to an example embodiment, the upper opening width W1 may be smaller than the lower opening width W2. The lower fixing hook width H2 may be greater than the upper opening width W1.

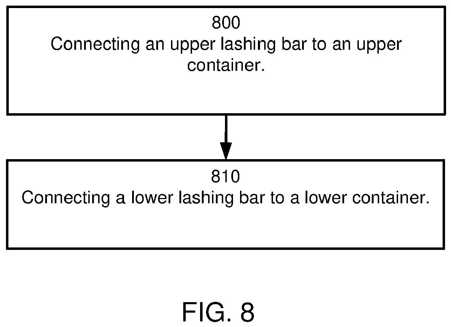

Fig. 8 illustrates an example of a method for supporting containers 8, 9 located on top of each other with a lashing system 1. The lashing system 1 may comprise at least one upper lashing element 2, which may comprise an upper lashing bar 4 and an upper turnbuckle 5. The lashing system 1 may further comprise at least one lower lashing element 3, which may comprise a lower lashing bar 6 and a lower turnbuckle 7. The upper lashing bar 4 may have a higher strength against the tension than the lower lashing bar.

At operation 800, the method may comprise connecting the upper lashing bar 4 to an upper container 8.

At operation 810, the method may comprise connecting the lower lashing bar 6 to the lower container 9.

Further features of the method directly result from functionalities of, for example, the lashing system 1 and/or lashing arrangement. Different variations of the method may be also applied, as described in connection with the various example embodiments.

The lashing system 1 for supporting containers 8, 9 located on top of each other may be configured to perform or cause performance of any aspect of the method(s) described herein.

Any range or device value given herein may be extended or altered without losing the effect sought. Also, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps or operations of the methods described herein may be carried out in any suitable order, or simultaneously where appropriate. Additionally, individual blocks may be deleted from any of the methods without departing from the scope of the subject matter described herein. Aspects of any of the embodiments described above may be combined with aspects of any of the other embodiments described to form further embodiments without losing the effect sought.

The term 'comprising' is used herein to mean including the method, blocks, or elements identified, but that such blocks or elements do not comprise an exclusive list and a method or apparatus may contain additional blocks or elements.

Although subjects may be referred to as 'first, 'second', or 'third' subjects, this does not necessarily indicate any order or importance of the subjects. Instead, such attributes may be used solely for the purpose of making a difference between subjects.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from scope of this specification.

## Claims

1. A lashing system (1) for supporting containers (8,9) located on top of each other, wherein the lashing system (1) comprises
at least one upper lashing element (2) comprising an upper lashing bar (4) and an upper turnbuckle (5), wherein the upper lashing bar (4) is configured to be connected to an upper container (8);
at least one lower lashing element (3) comprising a lower lashing bar (6) and a lower turnbuckle (7), wherein the lower lashing bar (6) is configured to be connected to the lower container (9); wherein
the upper lashing bar (4) has a higher strength against the tension than the lower lashing bar (6).

2. The lashing system (1) according to claim 1, wherein
the upper lashing bar (4) has an upper lashing bar cross-sectional area (C1);
the lower lashing bar (6) has a lower lashing bar cross-sectional area (C2); and
the upper lashing bar cross-sectional area (C1) is greater than the lower lashing bar cross-sectional area (C2).

3. The lashing system (1) according to claim 1 or claim 2, wherein
the upper lashing bar (4) is configured to be connected from a first upper lashing bar end (10) to an upper container (8) and from a second upper lashing bar end (11) to the upper turnbuckle (5);
the lower lashing bar (6) is configured to be connected from a first lower lashing bar end (12) to a lower container (9) and from a second lower lashing bar end (13) to the lower turnbuckle (7);
the upper lashing bar (4) has an upper lashing bar diameter (D1);
the lower turnbuckle (7) comprises a lower fixing fork (17) having a lower fixing fork opening width (F2); and
the upper lashing bar diameter (D1) is greater than the lower fixing fork opening width (F2).

4. The lashing system (1) according to claim 3, wherein
the second upper lashing bar end (11) comprises an upper fixing knob (14);
the upper turnbuckle (5) comprises an upper fixing fork (16) comprising an upper collar (24); and
the upper fixing knob (14) is configured to be attached to the upper collar (24).

5. The lashing system (1) according to claim 3 or claim 4, wherein
the second lower lashing bar end (13) comprises a lower fixing knob (15) having a lower fixing knob diameter (K2);
the upper turnbuckle (5) comprises the upper fixing fork (16) having an upper fixing fork opening width (F1); and
the lower fixing knob diameter (K2) is smaller than the upper fixing fork opening width (F1).

6. The lashing system (1) according to claim 5, wherein the lower fixing fork (17) comprises a lower collar (25) and the lower fixing knob (15) is configured to be attached to the lower collar (25).

7. The lashing system (1) according any one of the preceding claims, wherein
an upper end of the upper lashing element (2) is configured to be attached to a lower corner piece (18) of the upper container (8); and
the upper end of the lower lashing element (3) is configured to be attached to the upper corner piece (19) of the lower container (9).

8. The lashing arrangement according to any one of the preceding claims, wherein
the first upper lashing bar end (10) comprises an upper fixing hook (20);
the first lower lashing bar end (12) comprises a lower fixing hook (21); and
a form of the lower fixing hook (21) is configured to prevent the lower fixing hook (21) to be attached to a lower corner piece (18) of the upper container (8).

9. The lashing system (1) according to claim 8, wherein
the upper fixing hook (20) has an upper fixing hook width (H1);
the lower fixing hook (21) has a lower fixing hook width (H2); and
the lower fixing hook width (H2) is greater than the upper fixing hook width (H1).

10. The lashing system (1) according to claim 9, wherein
the upper fixing hook (20) is configured to attach the upper lashing element (2) to a lower corner piece opening (22) of the upper container (8); and
the lower fixing hook (21) is configured to attach the lower lashing element (2) to an upper corner piece opening (23) of the lower container (9).

11. The lashing system (1) according any one of the preceding claims, wherein at least one of the following: the upper lashing bar (4), the lower lashing bar (6), the upper turnbuckle (5), and/or the lower turnbuckle (7) is colour coded.

12. A lashing arrangement comprising at least one lashing system (1) according to any one of claims 1 to 11.

13. The lashing arrangement according to claim 12, wherein
at least one lower corner piece (18) of the upper container (8) comprises a lower corner piece opening (22);
at least one upper corner piece (19) of the lower container (9) comprises an upper corner piece opening (23); and
a form of the lower fixing hook (21) is configured to prevent the lower fixing hook (21) to be attached to the lower corner piece opening (22) of the upper container (8).

14. The lashing arrangement according to claim 13, wherein
the lower corner piece opening (22) has an upper opening width (W1);
the upper corner piece opening (23) has a lower opening width (W2);
the upper opening width (W1) is smaller than the lower opening width (W2); and
the lower fixing hook width (H2) is greater than the upper opening width (W1).

15. A method for supporting containers (8,9) located on top of each other with a lashing system (1), wherein the lashing system (1) comprises
at least one upper lashing element (2) comprising an upper lashing bar (4)and an upper turnbuckle (5); and
at least one lower lashing element (3) comprising a lower lashing bar (6) and a lower turnbuckle (7); wherein
the upper lashing bar (4) has a higher strength against the tension than the lower lashing bar (6), wherein the method comprises
connecting the upper lashing bar (4) to an upper container (8); and
connecting the lower lashing bar (6) to the lower container (9).
